# EUROPÄISCHE PATENTSCHRIFT

(11) **EP 1 816 717 B1**
(45) Veröffentlichungstag und Bekanntmachung des Hinweises auf die Patenterteilung: **14.07.2010**
(21) Anmeldenummer: 07001246.3
(22) Anmeldetag: 20.01.2007
(51) Int. Cl.: H02G 3/04

(54) **Versorgungssäule**
Supply column
Colonne d'alimentation

(30) Priorität: 04.02.2006 DE 202006001797 U
(43) Veröffentlichungstag der Anmeldung: 08.08.2007
(73) Patentinhaber: Tehalit GmbH, 67716 Heltersberg (DE)
(72) Erfinder: Stamer, Gernot, 66879 Kottweiler-Schwanden (DE); Schwarz, Jürgen, 67705 Trippstadt (DE)
(74) Vertreter: Patentanwälte Möll, Bitterich & Dr. Keller

(56) Entgegenhaltungen:
- EP-A- 1 335 462
- EP-B1- 0 958 640
- FR-A1- 2 757 694

## Beschreibung

Die Erfindung betrifft Versorgungssäulen zur Versorgung von Büro- und sonstigen Räumen mit Anschlüssen und Geräten für elektrische Energie, Telekommunikation oder Daten gemäß dem Oberbegriff des Anspruchs 1.

Versorgungssäulen, die zwischen Boden und Decke eines Büro- oder sonstigen Raumes verspannt werden, sind in unterschiedlichen Ausführungen bekannt und handelsüblich. Man vergleiche EP 1 335 462, EP 0 828 326 C, US 4 252 989, GB 22 13 847 A oder EP 0 958 640 B.

In der FR 2 757 694 wird eine Versorgungssäule mit einer Hubeinrichtung und einer Klemmeinrichtung beschrieben, mit der eine Druckstange nach oben gegen die Decke geführt wird.

Allen diesen Konstruktionen ist gemeinsam ein Säulenkorpus, ein Fuß, mit dem die Versorgungssäule auf dem Boden steht, ein Kopf, der sich an die Raumdecke anlegt, und eine Spannfeder, die für die nötige Anpresskraft sorgt und in begrenztem Umfang auch einen Abstandsausgleich ermöglicht.

Zum Spannen der Spannfeder sind unterschiedliche Konstruktionen bekannt. Überwiegend werden auf Gewindestangen laufende Gewindemuttern eingesetzt. Bekannt sind aber auch Kniehebelspanner und Exzenterhebel.

Um Abstandsdifferenzen zwischen Fußboden und Decke ausgleichen zu können, besitzen manche Versorgungssäulen einen Schlitten, der im Korpus der Versorgungssäule untergebracht ist und nach Verschieben in die erforderliche Position dort dauerhaft fixiert wird. Hierzu werden gewöhnliche Gewindeschrauben verwendet.

Das Aufstellen der bekannten Versorgungssäulen erfolgt in mehreren Schritten. Zunächst wird die Säule aufgestellt. Dann wird der Schlitten in die voraussichtlich richtige Höhe gefahren und fixiert. Dazu werden meist zwei Personen benötigt, wobei der eine die Säule hält und der andere den Schlitten fixiert. Anschließend wird die Spannfeder gespannt. Da sich die Spannvorrichtung oftmals im Deckenbereich befindet, muss der Installateur dazu auf die Leiter steigen. Stellt sich jetzt heraus, dass die Spannkraft der Spannfeder zu groß oder zu klein ist, muss der Vorgang wiederholt werden. Je nach den Besonderheiten der Montagestelle kann dieser Vorgang zwei Installateure über einen längeren Zeitraum beschäftigen. Das ist unbefriedigend.

Der vorliegenden Erfindung liegt die Aufgabe zugrunde, eine Versorgungssäule der eingangs genannten Art anzugeben, die von einer einzigen Person in kürzester Zeit zwischen Boden und Decke verspannt werden kann.

Diese Aufgabe wird gelöst durch eine Versorgungssäule mit den Merkmalen des Anspruchs 1.

Dank der vorliegenden Erfindung erfolgt die Fixierung des Schlittens im Korpus der Versorgungssäule und das anschließende Spannen der Spannfeder mit einem einzigen Handgriff. Dabei ist durch geschickte Dimensionierung der Konstruktionselemente dafür gesorgt, dass zunächst der Schlitten fixiert und danach die Spannfeder gespannt wird. Der Installateur fährt zunächst bei gelöster Spann- und Druckvorrichtung den Schlitten so lange nach oben, bis sich der Kopf gegen die Raumdecke legt. Anschließend muss er den Schwenkhebel nur noch in die Verschlussstellung schwenken und die Raumsäule sitzt mit der richtigen Spannung perfekt zwischen Boden und Decke fest.

Gemäß einer Weiterbildung der Erfindung umfasst die Hubeinrichtung eine Rolle, die am Schwenkhebel gelagert ist. Auf dieser Rolle ruht das untere Ende der Druckstange. Aufgrund der geringen Reibung einer solchen Rolle werden sowohl der Verschleiß als auch die Betätigungskraft deutlich reduziert.

Gemäß einer Ausgestaltung der Erfindung umfasst die Klemmeinrichtung einen Exzenter. Vorzugsweise ist dieser Exzenter im Bereich der Schwenkachse des Schwenkhebels positioniert. Dieser Exzenter bewirkt die Fixierung des Schlittens im Säulenkorpus in der gewünschten Höhe.

Vorzugsweise umfasst der Schlitten eine federnde Zunge, die durch die Klemmeinrichtung, insbesondere durch den Exzenter, gegen den Korpus gepresst wird. Eine derartige Zunge vergrößert die Anpressfläche zwischen Schlitten und Säulenkorpus und verringert gleichzeitig den Verschleiß.

Gemäß einer Ausgestaltung der Erfindung besitzt der Schlitten U-förmige Gleitkufen, die auf einer T-Schiene im Korpus laufen.

Gemäß einer alternativen Ausgestaltung ist zwischen Korpus und Schlitten ein Spalt gebildet. Die Klemmvorrichtung umfasst einen Keil, der in den Spalt eintaucht und so für den Reibschluss sorgt.

Gemäß einer Weiterbildung hierzu ist eine Feder vorgesehen, die den Keil in den Spalt presst. Gleichzeitig ist am Schwenkhebel eine Einrichtung zum Lösen des Keils vorgesehen. Auf diese Weise ist sichergestellt, dass der Keil sich nicht versehentlich von selbst lösen kann.

Gemäß einer ersten Weiterbildung der Erfindung ist die Spannfeder eine Gasdruckfeder.

Alternativ dazu kann die Spannfeder als luftgefüllter Gummibalg ausgebildet sein.

Gemäß einer dritten Ausführungsform ist die Spannfeder ein Tellerfederpaket.

Gemäß einer vierten Alternative ist die Spannfeder eine Wendelfeder.

Schließlich kann als Spannfeder auch eine Blattfeder verwendet werden.

Die Auswahl der jeweiligen Spannfeder ist abhängig einerseits von den räumlichen Verhältnissen, andererseits von den für das Verspannen erforderlichen Kräften.

Anhand der Zeichnung soll die Erfindung in Form zweier Ausführungsbeispiele näher erläutert werden. Es zeigen jeweils rein schematisch
- Fig. 1: in teilweise aufgebrochener Darstellung eine Versorgungssäule als Ansicht,
- Fig. 2: eine isometrische Darstellung der Spann-, Hub- und Klemmeinrichtung aus der Versorgungssäule der Fig. 1 und
- Fig. 3: eine alternative Spann-, Hub- und Klemmeinrichtung.

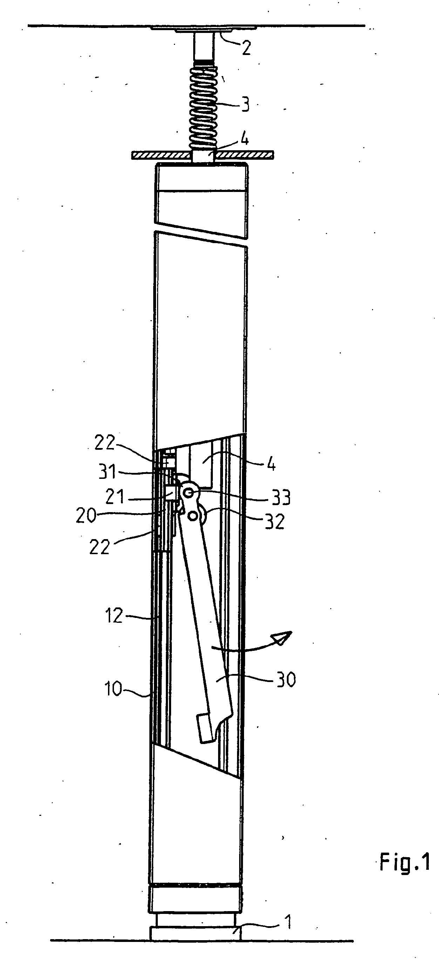

Fig. 1 zeigt rein schematisch und teilweise aufgebrochen eine Versorgungssäule zur Versorgung von Büro- und sonstigen Räumen mit Anschlüssen und Geräten für elektrische Energie, Telekommunikation und/oder Daten.

Man erkennt einen Fuß 1, einen Korpus 10 und einen gegen den Korpus 10 verschiebbaren Kopf 2. Des weiteren erkennt man aus dem oberen Ende des Korpus 10 herausragend eine Druckstange 4 mit Spannfeder 3. Die Spannfeder 3 verspannt die Versorgungssäule so zwischen Boden und Decke, dass sie sicher steht.

Im Inneren des Säulenkorpus 10 erkennt man einen Schlitten 20, der U-förmige Gleitkufen 22 besitzt, die auf einer T-Schiene 12 im Korpus 10 laufen.

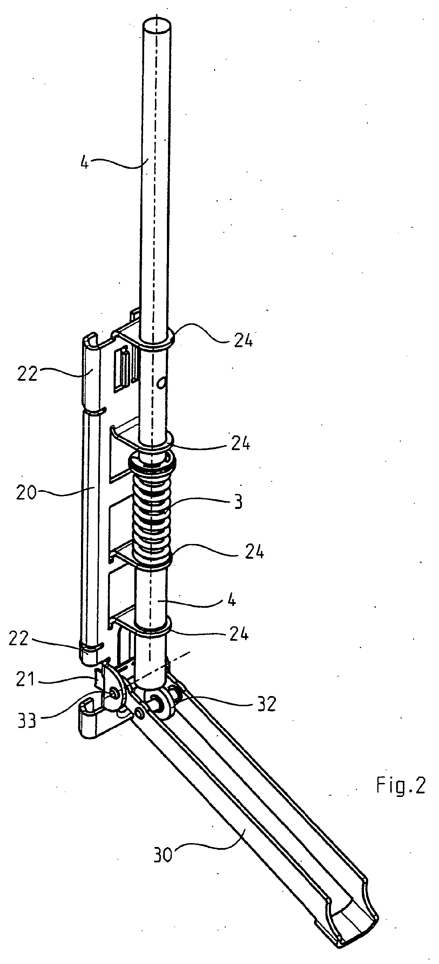

Fig. 2 zeigt die Spann-, Hub- und Klemmeinrichtung aus der Versorgungssäule der Fig. 1 in isometrischer Darstellung. Man erkennt den Schlitten 20 mit U-förmigen Gleitkufen 22 und einer federnden Zunge 21. Man erkennt ferner eine Schwenkachse 33, an der ein Schwenkhebel 30 angelenkt ist. Die Druckstange 4 ist in einer Reihe von Konsolen 24 höhenbeweglich geführt.

Am Schlitten 20 ist der Schwenkhebel 30 um eine Achse 33 schwenkbar gelagert. Im Bereich der Achse 33 ist der Schwenkhebel 30 als Exzenterscheibe 31 ausgebildet.

Schließlich erkennt man am Schwenkhebel 30 eine Rolle 32. Wird der Schwenkhebel 30 in Pfeilrichtung nach oben geschwenkt, legt sich die Rolle 32 gegen das untere Ende der Druckstange 4 und hebt diese hoch. Dank der rollenden Reibung geschieht dies mit minimalem Kraftaufwand und minimalem Verschleiß.

Am Schlitten 20 ist eine federnde Zunge 21 vorgesehen. Wird der Schwenkhebel 30 in Pfeilrichtung nach oben geschwenkt, legt sich die Exzenterscheibe 31 gegen die Zunge 21 und presst diese gegen die T-Schiene 12. Auf diese Weise wird der Schlitten 20 durch einfaches Verschwenken des Schwenkhebels 30 in Pfeilrichtung in der gewünschten Höhe am Säulenkorpus 10 fixiert.

Durch geeignete Dimensionierung der Exzenterscheibe 31 ist sichergestellt, dass das Weiterschwenken des Schwenkhebels 30 zwecks Anheben der Druckstange 4 und Spannen der Spannfeder 3 nicht behindert wird.

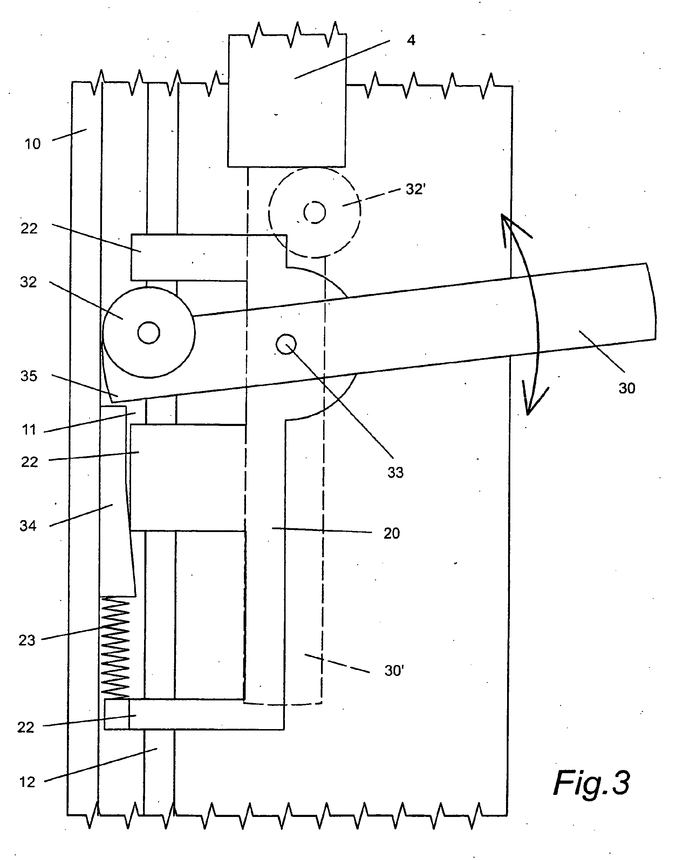

Fig. 3 zeigt einen Ausschnitt aus dem Säulenkorpus mit einer alternativen Spann-, Hub- und Klemmeinrichtung. Zwischen dem Schlitten 20 mit seinen U-förmigen Gleitkufen 22 ist ein Spalt 11 gebildet, in den von unten ein Keil 34 so eintaucht, dass der Schlitten 20 am Korpus 10 fixiert wird. Eine Feder 23 presst den Keil 34 in den Spalt und verhindert so ein versehentliches Lösen.

Um den Keil 34 dennoch verstellen zu können, ist am Schwenkhebel 30 eine Nase 35 vorgesehen, die den Keil 34 nach unten aus dem Spalt 11 herausdrückt, sobald der Schwenkhebel 30 in Pfeilrichtung nach oben geschwenkt wird.

Befindet sich der Schlitten 20 in der gewünschten Höhe, so wird der Schwenkhebel 30 in Pfeilrichtung nach unten geschwenkt, worauf die Feder 23 den Keil 34 in den Spalt 11 presst.

Zum Anheben der Druckstange 4 und Verspannen der Spannfeder 3 wird der Schwenkhebel in Pfeilrichtung ganz nach unten geschwenkt, worauf die Rolle 32 die Druckstange 4 anhebt. Diese Spannposition zeigt der in gestrichelten Linien dargestellte Spannhebel 30'.

Wie Fig. 3 erkennen lässt, ist die Rolle 32 außermittig angebracht. In der mit gestrichelten Linien eingezeichneten Spannposition befindet sich die Rolle 32' schon wieder jenseits der Gipfelposition und rechts von der Schwenkachse 33. Auf diese Weise ist sichergestellt, dass der Schwenkhebel 30' sich nicht von selbst versehentlich lösen kann.

## Patentansprüche

1. Versorgungssäule zur Versorgung von Büro- und sonstigen Räumen mit Anschlüssen und Geräten für elektrische Energie, Telekommunikation und/oder Daten, umfassend
- einen Fuß (1),
- einen Korpus (10),
- einen gegen den Korpus (10) verschiebbaren Kopf (2),
- einen im Korpus (10) höhenverstellbaren Schlitten (20), der den Kopf (2) trägt,
- eine Spannfeder (3), die den Kopf (2) gegen die Raumdecke drückt,
- eine Druckstange (4)
- und eine Spannvorrichtung zum Spannen der Spannfeder (3), welche
-- am Schlitten (20) gelagert ist
-- und einen Schwenkhebel (30) mit
-- einer Hubeinrichtung (32) für die Druckstange (4) bzw. die Spannfeder (3)
-- und eine Klemmeinrichtung (31), die den Schlitten (20) am Korpus (10) festklemmt, umfasst,
**gekennzeichnet durch** das Merkmal:
- die Hubeinrichtung (32) umfasst eine Rolle, die am Schwenkhebel (30) gelagert ist, mit der die Druckstange (4) nach oben gehoben wird.

2. Versorgungssäule nach Anspruch 1, **gekennzeichnet durch** das Merkmal:
- die Klemmeinrichtung (31) umfasst einen Exzenter.

3. Versorgungssäule nach Anspruch 2, **gekennzeichnet durch** das Merkmal:
- der Exzenter ist im Bereich der Schwenkachse (33) des Schwenkhebels (30) positioniert.

4. Versorgungssäule nach einem der Ansprüche 1 bis 3, **gekennzeichnet durch** das Merkmal:
- der Schlitten (20) umfasst eine federnde Zunge (21), die **durch** die Klemmeinrichtung (31) gegen den Korpus (10) pressbar ist.

5. Versorgungssäule nach einem der Ansprüche 1 bis 3, **gekennzeichnet durch** die Merkmale:
- der Schlitten (20) besitzt U-förmige Gleitkufen (22),
- die Gleitkufen (22) laufen auf einer T-Schiene (12) im Korpus (10).

6. Versorgungssäule nach einem der Ansprüche 1 bis 3, **gekennzeichnet durch** die Merkmale:
- zwischen Korpus (10) und Schlitten (20) ist ein Spalt (11) gebildet,
- die Klemmvorrichtung umfasst einen Keil (34), der in den Spalt (11) eintaucht.

7. Versorgungssäule nach Anspruch 6, **gekennzeichnet durch** die Merkmale:
- eine Feder (23) presst den Keil (34) in den Spalt (11),
- am Schwenkhebel (30) ist eine Einrichtung (35) zum Lösen des Keils (34) vorgesehen.

8. Versorgungssäule nach einem der Ansprüche 1 bis 7, **gekennzeichnet durch** das Merkmal:
- die Spannfeder (3) ist eine Gasdruckfeder.

9. Versorgungssäule nach einem der Ansprüche 1 bis 7, **gekennzeichnet durch** das Merkmal:
- die Spannfeder (3) ist ein luftgefüllter Gummibalg.

10. Versorgungssäule nach einem der Ansprüche 1 bis 7, **gekennzeichnet durch** das Merkmal:
- die Spannfeder (3) ist ein Tellerfederpaket.

11. Versorgungssäule nach einem der Ansprüche 1 bis 7, **gekennzeichnet durch** das Merkmal:
- die Spannfeder (3) ist eine Wendelfeder.

12. Versorgungssäule nach einem der Ansprüche 1 bis 7, **gekennzeichnet durch** das Merkmal:
- die Spannfeder (3) ist eine Blattfeder.

## Claims

1. A supply column for supplying offices and other rooms with connections and appliances for electric power, telecommunications and/or data, comprising
- a foot (1),
- a body (10),
- a head (2) displaceable towards the body (10),
- a carriage (20) which is vertically adjustable in the body (10) and which carries the head (2),
- a tension spring (3) which presses the head (2) against the room ceiling,
- a push rod (4)
- and a tensioning device for tensioning the tension spring (3), which
- is mounted on the carriage (20)
- and comprises a pivot lever (30) with
- a lifting device (32) for the push rod (4) and/or the tension spring (3)
- and a clamping device (31) which securely clamps the carriage (20) to the body (10),
**characterised by** the feature:
- the lifting device (32) comprises a roller which is mounted on the pivot lever (30) and with which the push rod (4) is lifted upwards.

2. A supply column according to Claim 1, **characterised by** the feature:
- the clamping device (31) comprises a cam.

3. A supply column according to Claim 2, **characterised by** the feature:
- the cam is positioned in the vicinity of the pivot axis (33) of the pivot lever (30).

4. A supply column according to any one of Claims 1 to 3, **characterised by** the feature:
- the carriage (20) comprises a resilient tongue (21) which can be pressed by the clamping device (31) against the body (10).

5. A supply column according to any one of Claims 1 to 3, **characterised by** the features:
- the carriage (20) has U-shaped glide shoes (22), the glide shoes (22) run on a T-rail (12) in the body (10).

6. A supply column according to any one of Claims 1 to 3, **characterised by** the features:
- a gap (11) is formed between the body (10) and the carriage (20),
- the clamping device comprises a wedge (34) which enters the gap (11).

7. A supply column according to Claim 6, **characterised by** the features:
- a spring (23) presses the wedge (34) into the gap (11),
- a device (35) is provided on the pivot lever (30) for releasing the wedge (34).

8. A supply column according to any one of Claims 1 to 7, **characterised by** the feature:
- the tension spring (3) is a gas-pressure spring.

9. A supply column according to any one of Claims 1 to 7, **characterised by** the feature:
- the tension spring (3) is an air-filled rubber bellows.

10. A supply column according to any one of Claims 1 to 7, **characterised by** the feature:
- the tension spring (3) is a disc spring stack.

11. A supply column according to any one of Claims 1 to 7, **characterised by** the feature:
- the tension spring (3) is a helical spring.

12. A supply column according to any one of Claims 1 to 7, **characterised by** the feature:
- the tension spring (3) is a leaf spring.

## Revendications

1. Colonne d'alimentation destinée à équiper des bureaux, et autres locaux, en raccords et en appareils dédiés à l'énergie électrique, aux télécommunications et/ou aux données, comprenant
- un piètement (1),
- un corps (10),
- une tête (2) pouvant coulisser vis-à-vis dudit corps (10),
- une pièce coulissante (20), portant ladite tête (2) et pouvant être déplacée en hauteur dans ledit corps (10),
- un ressort de serrage (3) pressant ladite tête (2) contre le plafond du local,
- une tige de pression (4)
- et un dispositif de tension conçu pour bander ledit ressort de serrage (3), ledit dispositif
- étant monté sur la pièce coulissante (20) et
- présentant un levier pivotant (30) comportant
- un système de levage (32), respectivement affecté à la tige de pression (4) ou au ressort de serrage (3)
- et un système de blocage (31) coinçant fermement ladite pièce coulissante (20) contre le corps (10),
**caractérisée par** la particularité consistant en ce que :
- ledit système de levage (32) englobe un rouleau monté sur le levier pivotant (30) et ayant pour effet de soulever ladite tige de pression (4).

2. Colonne d'alimentation selon la revendication 1, **caractérisée par** la particularité consistant en ce que :
- le système de blocage (31) comprend un excentrique.

3. Colonne d'alimentation selon la revendication 2, **caractérisée par** la particularité consistant en ce que :
- l'excentrique se trouve dans la région de l'axe de pivotement (33) du levier pivotant (30).

4. Colonne d'alimentation selon l'une des revendications 1 à 3, **caractérisée par** la particularité consistant en ce que :
- la pièce coulissante (20) comprend une languette (21) douée d'élasticité, qui peut être pressée contre le corps (10) par l'intermédiaire du système de blocage (31).

5. Colonne d'alimentation selon l'une des revendications 1 à 3, **caractérisée par** les particularités consistant en ce que :
- la pièce coulissante (20) possède des patins de glissement (22) configurés en U,
- lesdits patins de glissement (22) se meuvent, dans le corps (10), sur un rail (12) configuré en T.

6. Colonne d'alimentation selon l'une des revendications 1 à 3, **caractérisée par** les particularités consistant en ce :
- qu'un interstice (11) est formé entre le corps (10) et la pièce coulissante (20),
- que le dispositif de blocage comprend un coin (34) s'enfonçant dans ledit interstice (11).

7. Colonne d'alimentation selon la revendication 6, **caractérisée par** les particularités consistant en ce :
- qu'un ressort (23) exerce, sur le coin (34), une pression le faisant pénétrer dans l'interstice (11),
- qu'un système (35) de libération dudit coin (34) est prévu sur le levier pivotant (30).

8. Colonne d'alimentation selon l'une des revendications 1 à 7, **caractérisée par** la particularité consistant en ce que :
- le ressort de serrage (3) est un ressort de pression à gaz.

9. Colonne d'alimentation selon l'une des revendications 1 à 7, **caractérisée par** la particularité consistant en ce que :
- le ressort de serrage (3) est un coussin de caoutchouc empli d'air.

10. Colonne d'alimentation selon l'une des revendications 1 à 7, **caractérisée par** la particularité consistant en ce que :
- le ressort de serrage (3) est un empilement de rondelles élastiques.

11. Colonne d'alimentation selon l'une des revendications 1 à 7, **caractérisée par** la particularité consistant en ce que :
- le ressort de serrage (3) est un ressort spiroïdal.

12. Colonne d'alimentation selon l'une des revendications 1 à 7, **caractérisée par** la particularité consistant en ce que :
- le ressort de serrage (3) est une lame de ressort.
